# EUROPEAN PATENT SPECIFICATION

(11) **EP 3 041 713 B1**
(45) Date of publication and mention of the grant of the patent: **01.12.2021**
(21) Application number: 13892907.0
(22) Date of filing: 06.09.2013
(51) Int. Cl.: B60R 13/02, D05B 21/00

(54) **METHOD FOR INTRODUCING SEAM INTO DECOR LAYER AND DECOR LAYER**
VERFAHREN ZUM EINBRINGEN EINER NAHT IN EINE ZIERSCHICHT UND ZIERSCHICHT
PROCÉDÉ D'INTRODUCTION D'UNE COUTURE DANS UNE COUCHE DE DÉCOR ET COUCHE DE DÉCOR

(43) Date of publication of application: 13.07.2016
(73) Proprietor: Faurecia (China) Holding Co., Ltd., Shanghai (CN)
(72) Inventor: CUI, Scott, Shanghai 201103 (CN); BAILLET, Christophe, Shanghai 201103 (CN); MUNCH, Thierry, 60114 Méru Cedex 11 (FR); SCHAEFER, Frank, 76872 Steinweiler (DE); PENISCH, Thomas, 76187 Karlsruhe (DE)
(74) Representative: Pfenning, Meinig & Partner mbB
(86) International application number: PCT/CN2013/083060
(87) International publication number: WO 2015/032070

(56) References cited:
- EP-A1- 2 703 154
- EP-A1- 2 703 154
- FR-A1- 2 840 327
- FR-A1- 2 880 838
- JP-A- H04 144 715
- US-A- 5 382 398
- US-A- 5 382 398
- US-A- 5 497 720
- US-A- 5 544 602
- US-A1- 2008 111 409
- US-A1- 2009 090 285
- US-A1- 2009 090 285
- US-A1- 2013 139 739
- US-A1- 2013 147 228
- AMANDAJEAN: "CRAZY MOM QUILTS", , 11 July 2009 (2009-07-11), pages 1-15, XP055473776, Retrieved from the Internet: URL:http://crazymomquilts.blogspot.de/2009 /07/grid-quilting-mini-tutorial.html [retrieved on 2018-05-09]
- AMY JOHNSON: "Quilting with Ruler on Sewing Machine", , 16 November 2012 (2012-11-16), pages 1-1, XP054978337, Retrieved from the Internet: URL:https://www.youtube.com/watch?v=ptwN97 UJVG8 [retrieved on 2018-05-09]

## Description

The subject matter of this application is related to a method for introducing a seam into a decor layer by, for example, means of a sewing machine. After introducing the seam, the decor layer may be, for example, back-foamed or placed into an injection molding form to be rear-injected.

Vehicle trim parts may include a decor layer including a visible surface, usually called the A-surface and a surface opposite the visible surface, usually called the B-surface. The B-surface contacts a foaming layer or a hard plastic part and covers either the foam layer or the hard plastic part, respectively.

As added measures, said trim parts may comprise seams. Seams can be differentiated into functional seams and decorative seams. Functional seams, for example, connect two different decorative layers so that they appear as one decorative layer and may be treated further as if they were a single decorative layer. Functional seams may connect two different decorative layers or may be introduced into a single decorative layer, resulting in a loop at the B-surface of the decorative layer so that the visible surface appears to be comprise two separate decorative layers.

Decorative seams do not readily appear to have a specific function other than decoration. However, they also may be used, for example, to connect additional parts to the B-surface or the visible surface of the decor layer. It is also possible to introduce decorative seams which only penetrate the decor layer as additional decorative features of the trim part.

The positioning of the stitches poses a problem especially if the seams are introduced before the decor layer is back-foamed or rear-injected. It is very difficult to introduce the seams, which often may be curved, in such a manner that seams in finished trim parts made by an identical process always appear in the same place. This greatly affects reproducibility and, thus, the quality of the finished trim parts.

To solve this problem, document US 2007/0014969 A1 suggests using at least one visual feature on the visible surface as a guiding means for the sewing operation. However, if no such visible means is available or desired, said process does not solve the above-identified problem.

It is known from the prior art, for instance from FR 2880838 A1, EP 2703154 A1, and US 5382398, to provide a permanent structure on a surface, such as a groove or a rib, as guiding means. Said structure is permanently provided on the surface. The structure can be designed to engage with a guiding mechanism of a sewing machine, as shown in EP 2703154 A1. However, these approaches have the disadvantage that the structure remains on the final part, which is sometimes undesired.

US 2008111409 suggests a T-member which is connected to a first material and a second material and designed as a guiding means for engaging with a guide member of a sewing machine. The first and second material is then sewn to the T-member. As above, the T-member also remains permanently connected to the final part comprising the first and second material.

US 5 544 602 A shows an automated sewing device for sewing at least one base material with two curved corner portions, which includes a sewing machine, a base guide plate and a movable guide plate. The movable guide plate has three guide rollers, each being respectively disposed at the apexes of an equilateral triangle, in the reverse side thereof, and the movable guide plate is formed with a plurality of guide grooves in such a pattern that describes three loci respectively of the three guide rollers required to cause proper displacements of the movable guide plate for guiding at least one side of the base material including the two curved comer portions in a direction to the sewing needle of the sewing machine. With such arrangement, the base material is automatically fed and sewn by the feeding and sewing force of the sewing machine, insuring to precisely sew each of the two curved corner portions of base material along the curvature thereof.

FR 2 840 327 shows a method and a machine for producing a seam which is not detachable. The seam is produced with at least one seam thread having at least on the outside a thermoplastic material. A laser beam is applied locally to the seam, which is adapted to at least partially soften the thermoplastic material.

US 2013/0139739 shows a sewing machine which includes a display, a projection portion, a processor, and a memory. The projection portion is configured to project a mark having a predetermined shape toward a sewing machine bed. The memory is configured to store computer-readable instructions therein that, when executed by the processor, cause the sewing machine to project, by the projection portion, the mark toward the sewing machine bed, and display, by the display, mark display information that represents the mark and stitch type display information of a planned stitch type to be sewn, in a first positional relationship that corresponds to a second positional relationship between the position of the planned stitch type to be sewn and the position of the mark configured to be projected on the sewing machine bed.

Furthermore, US 2009090285 shows a bend of a material being used as a guiding means for the sewing operation. Using a bend as a guiding means comes with the significant drawback of being limited to sewing lines with a certain orientation with respect to the bend.

Thus, none of these methods provide full flexibility when introducing seams.

It is the object of this application to provide a solution to the problem outlined above. The problem is solved by the method of claim 1.

In the method for introducing at least one seam, means for guiding are projected onto the decor, the means for guiding including a light beam, before the decor layer is introduced into a sewing machine or a machine for introducing the seams by other means.

Additionally, means for guiding may be attached to the decor layer before the decor layer is introduced into a sewing machine or a machine for introducing the seams by other means. Thereafter, the at least one seam is introduced into the decor layer, and the means for guiding, which are attached to the decor layer, are then removed from the decor layer.

The means for guiding improves the reliability and the reproducibility of the seams introduced into the decor layer by providing the path along which the seam is to be introduced. This does not mean that the seam penetrates the means for guiding, but that the seam may be laterally offset and preferably parallel to the means for guiding.

Since the means for guiding are attached to decor layer only for a short period of time, i.e., at least during the sewing process, the decor layer does not have to be provided with any additional permanent features along which the seam is oriented.

This process has the advantage that it may be used with any decor layer already in production. Since the geometry of the decor layer does not have to be redesigned, the process can be implemented in current production facilities.

Since the means for guiding are removed from the decor layer before said decor layer is back-foamed or rear-injected, the decor layer has no additional parts which can affect an imprint on the visible surface of the decor layer due to an additional material layer, for example on the B-surface of the decor layer. Since a permanent means for guiding, for example on the B-surface, may show after some time due to aging processes of the foam or the rear-injected material, removal of the means for guiding before back-foaming or rear-injecting the decor layer prevents the above-described effect.

To simplify attachment of the means for guiding to the decor layer, a visual mark may be placed on the decor layer. However, such a visual mark does not affect the thickness, contour, elasticity, or flexibility of the decor layer, but is merely a visual mark, such as a colored line. The means for guiding then only need to be placed along said visual mark and may be used for guiding the decor layer when the at least one seam is introduced into the decor layer.

In order to achieve the object of the present invention, the method for introducing a seam into a decor layer for a vehicle trim part comprises means for guiding, which include a light beam, for example, a laser beam, which is projected onto a B-surface of the decor layer during the sewing process. No additional physical means for guiding is necessary. While this method is simple and results in little resources being used, the beam is only a projection and a reliable transport mechanism for transporting the decor layer through the sewing station or machine needs to be used. If the decor layer is moved in a direction different from the transport direction or moved in the transport direction at a speed different from the transport speed, the beam either needs to be configured to compensate the movement of the decor layer, i.e. the beam stays at the same coordinates of an intrinsic decor layer coordinate system, or the beam needs to be manually readjusted. Furthermore, it needs to be ensured that the sewing machine or the operator of the sewing machine can see the image of the beam on the B-surface of the decor layer. In some embodiments this leads to the decor layer's B-surface facing the operator during the sewing process, i.e. in some embodiments the seam is introduced from the B-Surface of the decor layer. After the seam has been introduced, the projected light beam is switched of and leaves no marks on the decor layer. While the method has the advantage of not requiring a physical means for guiding, a physical means for guiding has the advantage that said physical means for guiding can interact with a guide body of the sewing station or machine and thus simplify the transport mechanism, since the transport direction is defined by the physical means for guiding and its interaction with the guide body.

The projection of the light beam may be controlled by a controller which reads technical data of the decor layer from a file such as a CAD file and projects the beam so that the beam covers at least one point of the contour along which the seam is to be introduced. It is noted that the projection of a beam is different from placing physical visual marks onto the decor layer, such as a pen mark. In the context of this application marks which leave an additional substance on the decor layer are considered a physical mark.

The method may be easily implemented into the production cycle and has only a limited impact on cycle time. However, the small impact on cycle time has the effect of a noticeable improvement in reliability and reproducibility of the seams in the decor layer, and hence reduces wastage due to production of faulty parts. Furthermore, use of this method is not expensive and provides an easy means for producing, for example, straight, curved, or more complex designs of decorative seams, depending on the properties of the material used for the means for guiding.

In one embodiment, the means for guiding further include a guiding profile. Guiding profiles are easily available and can be produced cheaply. For example, the guiding profile may be made from a flexible plastic material such as foam, a rubber, a thermoplastic material, or an extruded material used for sealing profiles, for example, in doors. Furthermore, the material of the guiding profile can be chosen to be a recycled or recyclable material.

In a further embodiment, the guiding profile is an elongated profile which is preferably attached to the decor layer along a length which is at least as long as the length or substantially the same as the length of the seam to be introduced. However, in alternative embodiments the elongated profile may be shorter than the introduced seam. The contour of the attached profile then defines the contour of the seam to be introduced. In a specific embodiment, the elongated profile may be produced by an extrusion process.

In a further embodiment, the means for guiding the decor layer are attached to the B-surface opposite the decor surface even though in alternative embodiments the means for guiding may be attached to the decor surface. When attaching the means for guiding to the B-surface, remainders of the profile which remain on the B-surface after the means for guiding have been removed from the decor layer do not compromise the quality or the visual appearance of the trim part.

In a further embodiment, the means for guiding are attached to the decor layer by means of adhesives. Preferably, temporary adhesives such as adhesive tape, particularly double-sided tape, are used. Furthermore, the adhesive may be glue. In some embodiments, the glue may be water-soluble or water-steam-soluble and is preferably easily removable and leaves no stains on the decor layer. Among the available alternatives, the material used as glue can be chosen depending on the material chosen for the decor layer.

In a further embodiment, the means for guiding engage in a guide body which is connected to the sewing machine and guides the means for guiding along a preferred guiding direction. Since the guide body is connected to the sewing machine so that the guide body has a defined orientation with respect to the sewing machine, the direction along which the decor layer is moved or transported along the guide body defines the contour of the seam to be introduced by the sewing machine. The guide body does not necessarily have to be a part of the sewing machine but can be mechanically fixed to a table so that it has a defined orientation with respect to the sewing machine. Alternatively, the guide body can be fixed by a mechanical connection to the sewing machine, a distance away from the needles or the stitching plate.

When using a guide body, an embodiment of the guide body includes a groove for guiding the means for guiding therein. Since the means for guiding, for example the guiding profile, are introduced in the groove, the guiding profile may only be moved in a single direction, thereby defining the contour of the seam.

In a further embodiment, the guide body is a part of the sewing machine and may be either a separate part from or may be integral with the stitching plate of the sewing machine. This improves the integration of the process.

The guide body as described herein may be claimed on its own as a separate invention. This is particularly true for the embodiment of the guide body including means for detaching the means for guiding from the decor layer. The means for detaching may be integrally connected to the guide body in the form of a bridge including a blade for cutting off the means for guiding from the decor layer. This is particularly advantageous when the guide body includes a groove for guiding the means for guiding. When the guide body is used as a stitching plate, the means for guiding may be detached from the decor layer only shortly after the seam has been introduced. Further embodiments or features of such a guide body may be found in the specification or the following examples.

In a further embodiment, the step of introducing the at least one seam comprises the at least one introduced seam running essentially parallel to at least a part of the attached means for guiding. By choosing a one-to-one correspondence between the means for guiding and the seam, a reliable and reproducible seam may be introduced.

Different types of seams may be used. While deco-stitches: such as indentations in the decor layer appearing as a seam on the visible surface of the decor layer; may be introduced with this process as well, an embodiment of the claimed subject-matter a yarn seam as the at least one seam. Furthermore, the introduced seam may be a decorative seam.

In a further embodiment of the method, an area of the surface of the decor layer which is penetrated by stitching holes of the introduced seam is covered by a sealing tape to ensure that during the process of back-foaming or rear-injecting material, no material penetrates said stitching holes and is found on the visible surface side of the decor layer.

The decor layer may be made from a plurality of materials. It may be made from a plastic material, such as PVC, or a thermoplastic material, such as TPO, TPU, or TPEE or a thermoset plastic material such as PUR. Furthermore, natural materials such as leather, leather imitations, or ALCANTARA^{®} (registered trademark of the company ALCANTARA S.p.A.) may be used. Furthermore, it may be made of fabric.

In a further embodiment, the decor layer has a thickness between 0.2 mm and 2.5 mm.

On the finished decor layer, after the means for guiding has been removed, traces of either the adhesive or the means for guiding may still be found on the decor layer. Hence, a decor layer produced by the method described herein can be easily identified, in contrast to decor layers known from the prior art.

In an alternative embodiment of the subject-matter of the application, a method for introducing a seam additionally to the method as disclosed in claim 1, includes the introduction of a groove into a B-surface of a decor layer, introducing said decor layer into a sewing machine and introducing a seam into the decor layer. Optionally, a guiding body of the sewing machine or station or connected to the sewing machine may engage in the groove for guiding the decor layer such that the introduced seam has the desired contour. In this alternative embodiment, the groove introduced into the decor layer has a function comparable to the function of a decor layer including an attached guiding profile as discussed in this application. However, the methods differ in that the groove is not necessarily "removed", for example, by filing the groove after the introduction of the seam, but can remain on the B-surface of the decor layer. The guide body of the sewing machine to be used in this alternative may include a web for engaging the groove of the decor layer, instead of a groove for guiding the physical means for guiding as discussed in other embodiments. While this embodiment has the advantage that no additional material is needed in comparison to the embodiment of the subject-matter including a physical means for guiding such as a guiding profile, it has the advantage that the decor layer is weakened in the area of the introduced groove. This may result in a thicker decor layer being necessary for this embodiment than in the other embodiments. Thus, variations of the embodiments discussed in connection with a physical means for guiding may be applied to this embodiment of a decor layer, which includes a groove, or the method for introducing a seam into this decor layer.

The groove can be introduced into the decor layer by means of a knife, a blade or a laser which is strong enough to penetrate the material of the decor layer. In other embodiments the groove can be introduced into the decor layer during or shortly after a slush or deep-drawing procedure, while the decor layer is still soft enough to be formed. Particularly, the tool for producing the decor layer may include a web having a contour of the groove to be introduced on the B-surface of the decor layer.

A guide body, which may optionally be used in this method, may include a web having a width and height to fit into the groove of the decor layer. However, the web needs only to extend along a short distance in comparison to the length of the groove which may extend along the entire length of the seam to be introduced (or slightly longer or shorter).

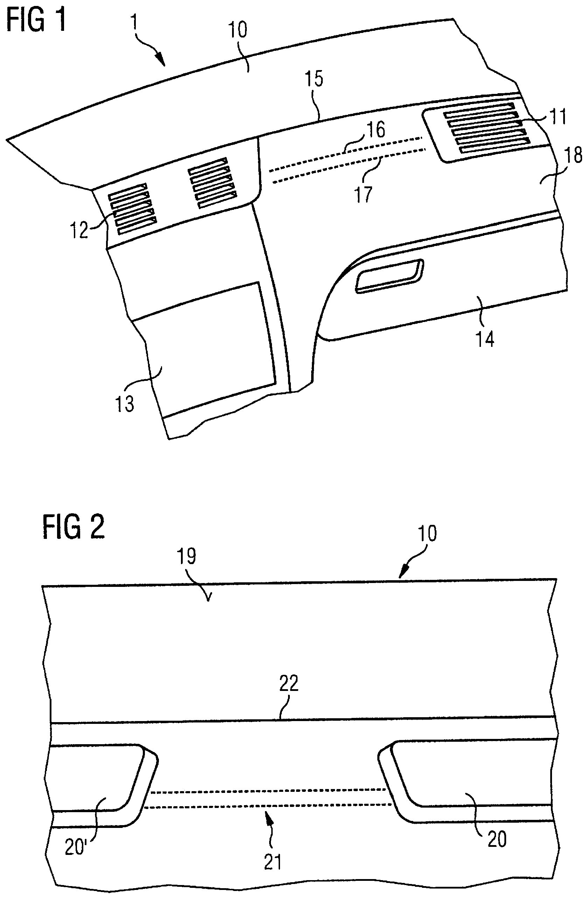

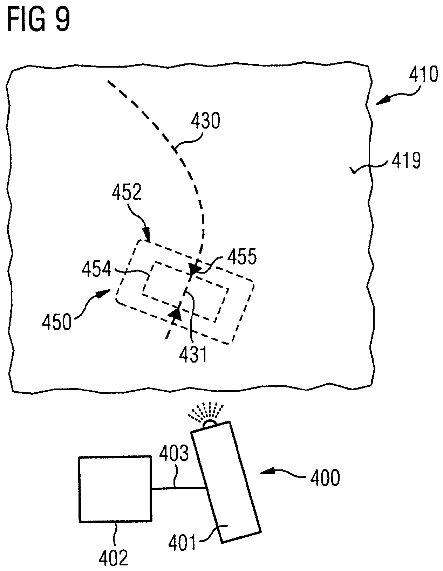

In the following, the claimed subject-matter shall be further defined by the examples shown in Figure 9, showing the principal embodiment of the present invention according to claim 1, and the examples of Figures 1-8, showing examples for physical guiding means, which can be applied in addition to the guiding means as described in fig. 9:
- Fig. 1: shows an exemplary interior panel of a vehicle;
- Fig. 2: shows a rear side of the decor layer of the interior panel of Fig. 1;
- Figs. 3A and 3B: show an arrangement of a guiding profile attached to the decor layer of Fig. 2;
- Figs. 4A through 4D: show different examples of a guiding profile attached to the decor layer as well as the introduced seam covered by sealing tape;
- Figs. 5A and 5B: show an embodiment of a sewing machine and a guide body which may used in an embodiment of the method;
- Figs. 6A to 6C: show a guide body which may be used in the method but may also be claimed as a separate subject-matter;
- Fig. 7: shows an alternative means for removing a guiding profile from a decor layer;
- Figs. 8A and 8B: show a further embodiment of a decor layer and a sewing machine; and
- Fig. 9: shows the principal embodiment of the present invention according to claim 1 of a decor layer without a physical but a virtual, projected means for guiding.

**Figure 1** shows an exemplary trim part for which a decor layer according to the claimed subject-matter may be used in addition to the subject-matter of claim 1. Trim part 1 is an instrument panel comprising a decor layer 10, ventilation outlets 11 and 12, a visible console 13 for a radio or a graphical user interface (as examples), as well as a glove compartment 14. The decor layer includes a decorative rib 15 as well as yarn seams 16 and 17, which have been introduced previously and the contour of which run between ventilation outlet 11 and ventilation outlet 12. The seams 16 and 17 are decorative seams. Thus, they only penetrate the surface of the decor layer 10 itself and are introduced before the decor layer is rear-foamed or rear-injected. The surface of the decor layer 10 which is visible in Fig. 1 is the decor surface 18. Even though the claimed subject-matter shall be exemplified by means of a decor layer for an instrument panel, the claimed subject-matter can be applied to decor layers for other trim parts or any other interior parts such as a door, a roof decor, or to decor layers for other vehicles, such as airplanes or trains.

The decor layer 10 is a slushed skin of approximately 1.2 mm thickness produced from a PVC material. It may comprise an in-mold graining.

In **Figure 2****,** decor layer 10 is shown with the B-surface 19 facing the observer. The decor layer 10 as shown in Fig. 2 is the decor layer as it comes out of the slushing process and includes closed compartments 20' and 20. The entire decor layer 10 may be a closed surface, and the height of the closed compartments 20' and 20 extends several millimeters or centimeters over the remaining surface and are designed to not be back-foamed or rear-injected or to only be back-formed or rear-injected with a limited thickness so that the ventilation outlets 11 and 12 can be placed in the contours defined by the closed compartments 20' and 20. Furthermore, the B-surface 19 shows the rear side 22 of rib 15, which appears to run along a straight line. Furthermore, the rear side 22 of seams 16 and 17 is visible. Even though Fig. 2 discloses the seams running essentially parallel to the rib 15, this is not a prerequisite for the implementation of the claimed process.

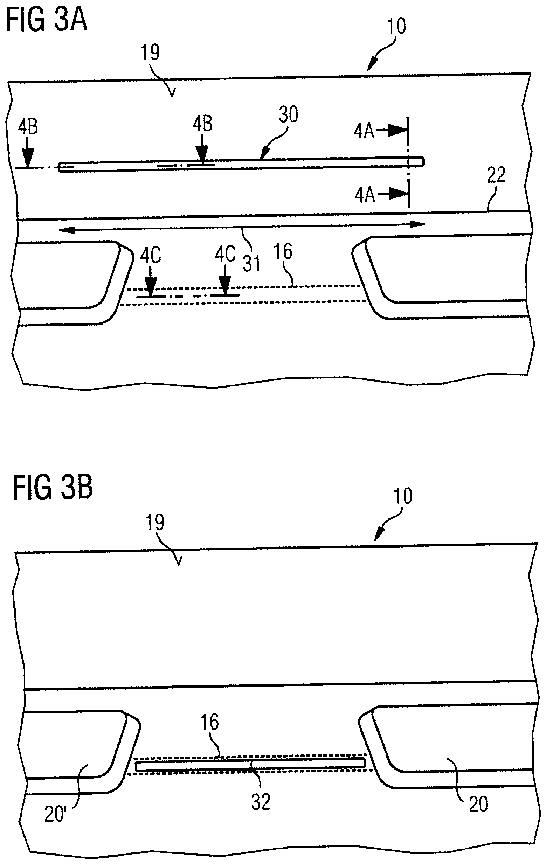

**Figure 3A** shows the decor layer 10 before the seams are introduced. For better illustration, the contour of the seams to be introduced is still visible, though. In Fig. 3A, a guiding profile 30 is attached to B-surface 19. The guiding profile 30 extends over a length 31 in a direction essentially parallel to the direction of the seams to be introduced. As will be apparent later on, the guiding profile also extends in height and thereby forms a guiding rib which can be guided in a groove of a guide body, for example. The guiding profile is an elongated profile which is produced in an extrusion process. In the example of Fig. 3A, it is laterally offset from the seams to be introduced by several centimeters. Furthermore, it extends over a length which exceeds the lengths of the seams to be introduced. In contrast, the embodiment shown in **Figure 3B** shows a guiding profile 32 which is placed between the two seams to be introduced and has a length shorter than the lengths of the seams to be introduced.

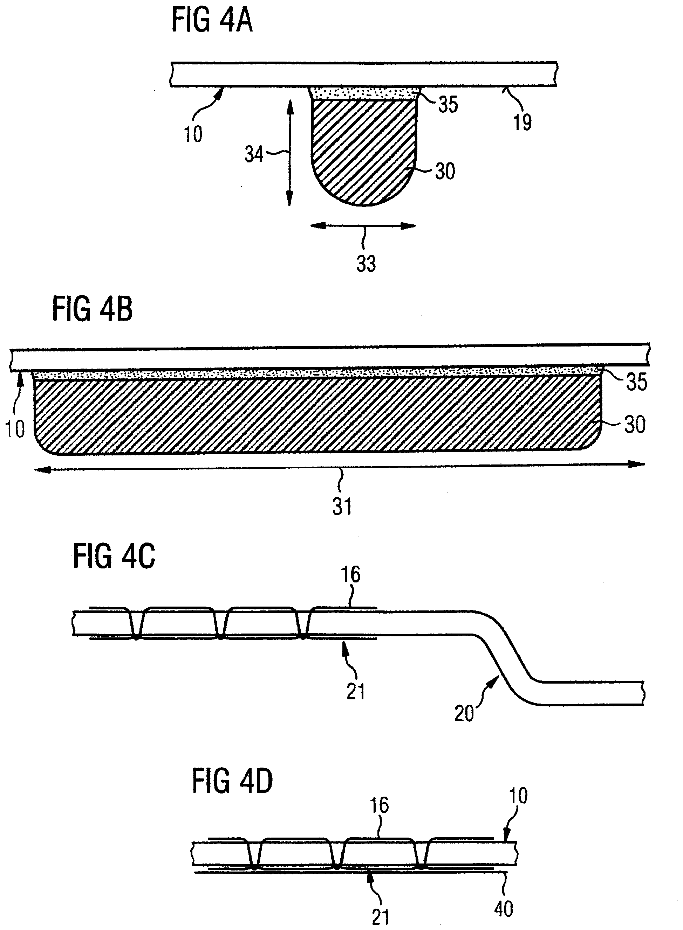

Further details shall be explained by the detailed views of the guiding profile and the seams in **Figures 4A-4D****.**

**Figure 4A** displays a cross-section through the decor layer to which the guiding profile 30 is attached. The guiding profile has a width 33 which is substantially smaller than the length along which it extends. In the present example, the guiding profile 30 has a width of 2 mm. However, widths between 1 mm and 5 mm can be envisioned. Furthermore, the guiding profile 30 has a height of about 2 mm as well. Again, the height can vary between 0.5 mm and 10 mm. In the cross-sectional view, the guiding profile has a flat underside which is attached by glue 35 to the B-surface 19 of the decor layer 10. The cross-section of the guiding profile 30 is "U"-shaped, but other shapes can be envisioned. For example, the cross-sectional view of the guiding profile 30 may be square or rectangular. Furthermore, conical shapes are also covered by the claimed subject-matter.

Glue 35 is water-soluble glue, and the glue layer between the guiding profile 30 and the decor layer 10 is less than 0.2 mm. However, thicker layers of glue or thinner layers of glue can be used depending on the material of the decor layer, and glue compatible therewith. The guiding profile itself is made from a thermoplastic material but other material would be suitable as well. Curved shaped guiding profile may be used in case of curved shaped seam. Even though the guiding profile 30 in Fig. 3A appears to run along a straight line, the guiding profile could have been attached to the B-surface 19 of the decor layer 10 in a curved fashion as well. Particularly, the guiding profile could have been attached to the decor layer in the shape of a specific pattern where the contour of the seam would then follow the contour of the guiding profile.

Even though the means for guiding are hereby exemplified as a guiding profile, further means for guiding could be envisioned, such as a cordlike guiding means, or a wire metal means. Even though not shown in Fig. 3A, to simplify the process of attaching the guiding profile to the decor layer, visual marks can be printed upon the B-surface 19 for easier application of the guiding profile.

**Figure 4B** discloses a side view of the guiding profile 30 shown in Fig. 3A.

**Figure 4C** shows a different side view of the decor layer 10 of Fig. 3A showing seam 16 and the rear side 21 of said seam. In this embodiment seam 16 is a yarn seam made from a natural fiber yarn. However, artificial fibers may also be used. The seam includes a top seam and a bottom seam which are interleaved in a sewing process well established in the prior art. Even though the embodiments shown in this application all include more than a single seam, it is easily understood that more than two seams, or only a single seam, may also be introduced into the trim part with the help of the described process.

**Figure 4D** discloses the decor layer 10 including the seam 16 at a later stage in the process where a sealing tape 40 is attached to the B-surface of the decor layer, covering the stitching holes introduced during the stitching process so that during a back-foaming or rear-injection process no foam or molten plastic, respectively, can penetrate said holes. This ensures the high aesthetic appearance of the visible surface of the decor layer or the trim part.

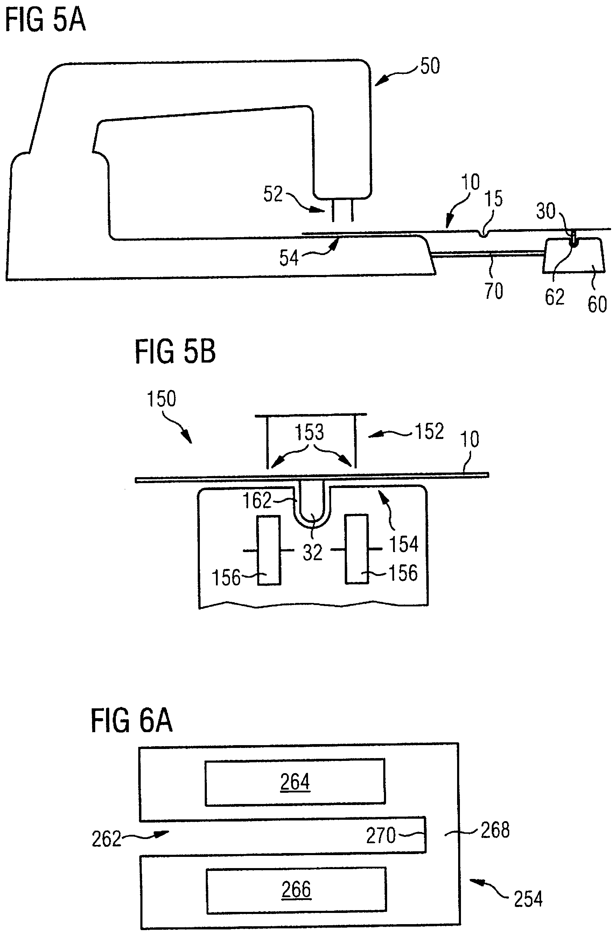

**Figure 5A** discloses a sewing machine 50 including a sewing foot 52 with two needles and a stitching plate 54 along which the seams are introduced into the shown decor layer 10. Further shown is a guide body 60 including a groove 62 for accommodating the guiding profile 30 attached to the B-surface of the decor layer 10 as shown in Fig. 3A. The groove has a width and depth which substantially matches the width and height of the guiding profile of the decor layer. In a further embodiment the width and/or height of the groove exceeds the width and height of the guiding profile. The guide body may be made from plastic, metal, or a compound material. The guide body is mechanically fixed to the sewing machine 50 by means of a mechanical connection 70. The mechanical connection 70 may include screws and rods to define the position of the guide body with respect to the sewing machine, in particular the sewing foot 52. By defining the relationship between the guide body, the groove 62, and the stitch plate 54, the guiding profile 30 defines the contour of the seams to be introduced.

In **Figure 5B****,** a different embodiment of a sewing machine is shown. The embodiment of the sewing machine only shows a sewing foot 152 including two needles 153 as well as a stitching plate 154 which includes a groove 162 for guiding the guiding profile 32 as shown, for example, in Fig. 3B. Beneath the stitch plate 154, two wheels 156 are shown which hold the bottom yarn for the seam to be introduced. Furthermore, the skin or decor layer 10 is visible with the guiding profile 32. In the embodiment of Fig. 5B, the stitching plate 154 is integral with the guide body.

In the embodiments of **Figures 6A-6C****,** a stitch plate 254 is shown which includes means for detaching the guiding profile from the decor layer after the seam has been introduced. Even though the means for detaching are now integrated into the stitching plate, it can easily be envisioned that a guide body in the form of the stitching plate 254 but separate from the sewing machine may also be used for detaching the guiding profile from the decor layer.

Stitching plate 254 as shown in **Figure 6A** is made from hard plastic or metal. It includes a groove 262 for guiding the guiding profile therethrough. Furthermore, it includes openings 264 and 266 such that the needles, as, for example, shown in Fig. 5B, may interact with the seams held on the wheels 156. The direction along which the profile is transported through the groove is from left to right. At the right-hand end of the stitching plate 254, a bridge 268 is visible. At the leftmost end of the bridge, the edge of said bridge is designed as a blade 270. When the decor layer is drawn from the left to the right-hand side, the seams are introduced in the region of the openings 264 and 266, and shortly thereafter the guiding profile is detached from the decor layer by means of the blade 270.

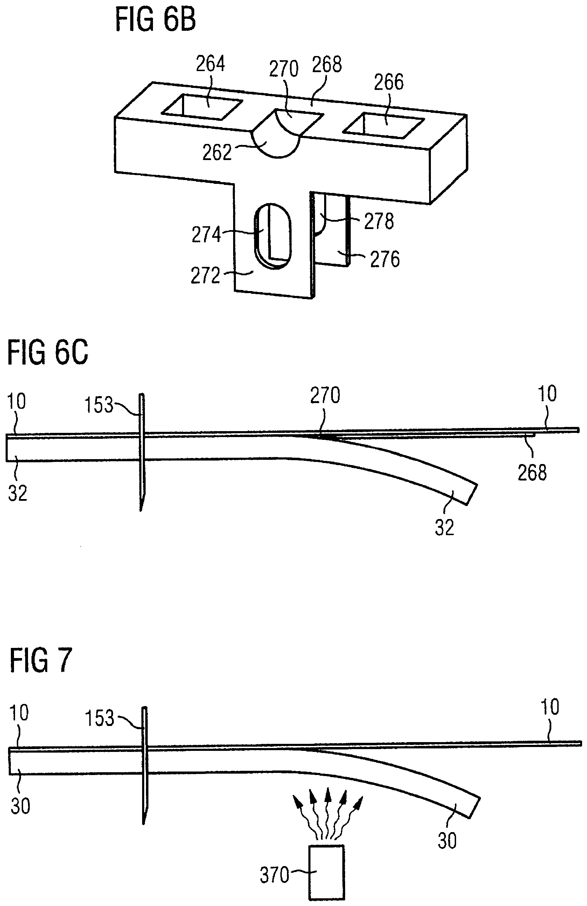

**Figure 6B** shows a side view of the stitching plate 254. The stitching plate 254 further includes attachment struts 272 and 276 including orifices 274 and 278 for attaching the stitching plate to a sewing machine or another holding body. It can, furthermore, be seen that a mechanical connection may be connected to the stitching plate by means of the orifices. Fig. 6B shows how the bridge 268 (including the blade 270) covers a section of the groove 262 so that the profile may be detached from the decor layer.

The process of detaching the guiding profile from the decor layer is illustrated by **Figure 6C****.** Decor layer 10 includes an attached guiding profile 34. Needle 153 illustrates the insertion of the seam. As the decor layer is transported from the left to the right-hand side and the guiding profile 34 is transported through the groove 262, the guiding profile and the decor layer meet blade 270 and are separated from each other. With the shown stitch plate, no additional detachment step is necessary.

In **Figure 7****,** different means for detachment of the guiding profile are shown. Again, the decor layer 10 including the guiding profile 34 is moved from the left to the right-hand side. After the seam has been introduced by needle 153, the decor layer 10, particularly in the area to which the guiding profile is connected, passes an area which is heated by a heater 370. The heater may either use radiation heat, or it could use water steam. In the case of water-soluble glue, the water steam dissolves the adhesive connection between the decor layer 10 and the guiding profile, which thereafter can be easily detached from the decor layer 10.

The embodiments shown in Figures 1 through 4 show embodiments in addition to the embodiment as shown in Figure 9, where a physical means for guiding such as a guiding profile is attached to the decor layer. In further embodiments, the decor layer may instead (or additionally) include a groove which defines the contour of the seam to be introduced. The groove may have a depth of 1/10 to ½ of the thickness of the decor layer and a width comparable to the width of the guiding profile discussed in the description of Figures 4. The groove may be introduced by a knife or other methods known in the art.

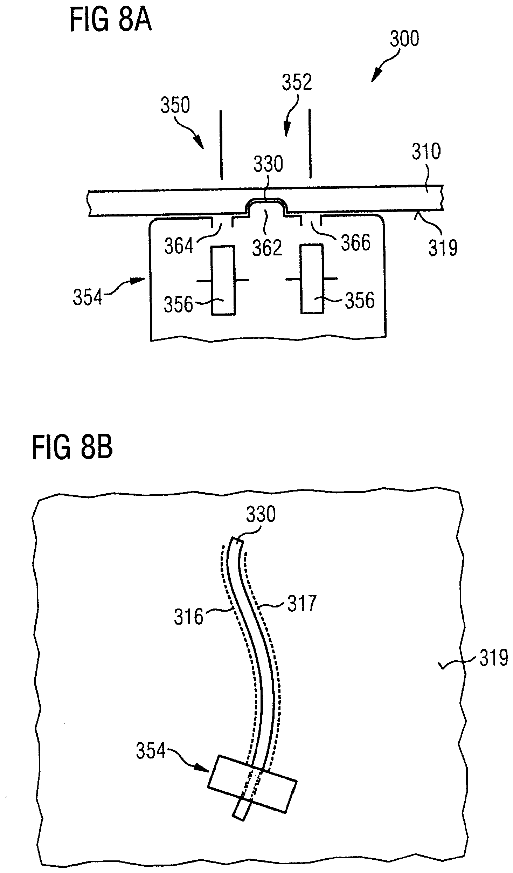

Figure 8A shows an arrangement 300 including a B-surface 319 of a decor layer 310 with a groove 330, which engages in a guide body 354 of a sewing machine 350. The guide body 354 includes a web 362 and in the shown example is configured as a stitch plate. The stitch plate includes through-openings 364, 366 through which the needles 352 introduce one or more decorative seams 316 and 317, which are shown in Figure 8B. The decor layer 310 has a thickness of 5mm and is a slushed PVC skin. The groove has a width of 4mm and a height of 2mm and was introduced into the PVC skin after the slushing process. The guide body 354is comparable to stitch plate 154 with the difference that it has a web 362 instead of a groove 162.

Figure 8B shows the B-surface 319 of the decor layer. The seams 316 and 317 run parallel to the groove 330. Additionally, the guide body 354 is shown. The length of the guide body along the direction of the groove is much shorter than the length of the groove 330 which extends a little longer than the introduced seam.

Figure 9 shows the principal embodiment of the subject-matter according to claim 1. In this embodiment no physical engagement occurs between a guide body and a decor layer, but the means for guiding are projected upon the B-surface of the decor layer.

A system 400 including a laser 401 and a controller 402 (such as a computer or microcontroller with attached memory) reads data of a decor layer 410 from a file 403 or from a recorded image (in this case the system may also include a camera). The data may include the contour of a seam line (shown in Figure 9 by the projected beam image 430) to be introduced into the decor layer. In the shown embodiment, an operator of the sewing machine needs to move the decor layer with its B-surface 419 facing upward through the sewing machine 450, which is not fully shown but only illustrated by the dotted lines. The laser 401 projects an image 430 of the contour onto the B-surface 419, including an image segment 431. The projected image defines the contour of the seam to be introduced. After the seam has been introduced, the beam is switched off or moved to the next decor layer. While Figure 9 shows an image extending over the entire length of the seam to be introduced, the projection of a smaller segment, such as segment 431, may suffice. In this case a speed of a transport unit (not shown) of the sewing machine needs to be forwarded to controller 402 such that the projected image corresponds to the seam contour of the segment of the B-surface which is in between the visible marks 455 of the sewing foot 452. Since the decor layer is moved during the sewing process the projected image will change in agreement with the data of the seam to be introduced. The stitch plate 454 may include a groove or web for guiding, however, this is not a mandatory feature.

Since the decor layer can be produced with sufficient accuracy, the data read by the controller and the beam projected onto the B-Surface of the decor layer ensures that a series of decor layers has almost identical seam contours without having to draw a physical visual feature upon any surface of the decor layer.

It has to be noticed that this application, describing the different embodiments of the method for introducing a seam and guide bodies to be used in said process, is not only limited to means for guiding located on the B-surface of the decor layer, but also to means for guiding located on the A-surface.

## Claims

1. Method for introducing a seam into a decor layer for a vehicle trim part, the decor layer having a visible A-surface and a B-surface opposite the visible A-surface, the method comprising the following steps:
- projecting a means for guiding onto the decor layer (10);
- introducing the decor layer into a sewing machine (50, 150);
- introducing at least one seam (15, 16) into the decor layer;
- removing the means for guiding from the decor layer,
wherein
the means for guiding includes a light beam projected onto the B-surface (419) of the decor layer, wherein a system (400) including a laser (401) and a controller (402) is provided, which system (400) reads data of the decor layer from a file (403) or from a recorded image, the data including a contour of a seam line to be introduced into the decor layer, and wherein the laser (401) projects an image of the contour onto the B-surface (419), the image defining the contour of the seam line to be introduced.

2. Method according to claim 1, comprising a step for attaching a means for guiding to the decor layer (10),
wherein the step of introducing the decor layer into the sewing machine comprises the means for guiding engaging in a guide body (60), which has a defined orientation and position to the sewing machine and guides the means for guiding along a direction and wherein the guide body includes a groove (62; 162; 262) for guiding the means for guiding therein.

3. Method according to claim 2, wherein the means for guiding include a guiding profile (30, 32).

4. Method according to claim 3, wherein the guiding profile is an elongated profile.

5. Method according to any of claims 2 to 4, wherein the means for guiding are located on the B-surface.

6. Method according to any of claims 2 to 5, wherein the means for guiding are attached to the decor layer by an adhesive.

7. Method according to any of claims 2 to 6, wherein the guide body is a part of the sewing machine, preferably of a stitching plate (54; 154; 254) of the sewing machine.

8. Method according to any of claims 2 to 7, wherein the step of introducing the at least one seam comprises the at least one introduced seam running essentially parallel to at least a part of the attached guiding means.

9. Method according to any of the preceding claims, wherein the at least one seam is a yarn seam.

10. Method according to any of the preceding claims, wherein the at least one introduced seam is a decorative seam.

11. Method according to any of the preceding claims, wherein two or more seams are introduced.

12. Method according to any of the preceding claims, wherein a sealing tape (40) covering an area of a surface of the decor layer is applied, the covered area being penetrated by the introduced seam.

13. Method according to any of the preceding claims, wherein the decor layer comprises at least one of a plastic material, preferably PVC, or a thermoplastic material, preferably one of TPO, TPU, TPEE.

14. Method according to any of the preceding claims, wherein the decor layer has a thickness between 0.2mm and 2.5mm.

## Patentansprüche

1. Verfahren zum Einbringen einer Naht in eine Dekorschicht für ein Fahrzeuginnenverkleidungsteil, wobei die Dekorschicht eine sichtbare Oberfläche A und eine Oberfläche B gegenüber der sichtbaren Oberfläche A aufweist, wobei das Verfahren die folgenden Schritte umfasst:
- Projizieren eines Führungsmittels auf die Dekorschicht (10);
- Einbringen der Dekorschicht in eine Nähmaschine (50, 150);
- Einbringen mindestens einer Naht (15, 16) in die Dekorschicht;
- Entfernen des Führungsmittels von der Dekorschicht,
wobei
das Führungsmittel einen Lichtstrahl einschließt, der auf die Oberfläche B (419) der Dekorschicht projiziert wird, wobei ein System (400) bereitgestellt wird, das einen Laser (401) und eine Steuereinrichtung (402) aufweist, wobei das System (400) Daten der Dekorschicht aus einer Datei (403) oder aus einem aufgezeichneten Bild liest, wobei die Daten eine Kontur einer Nahtlinie, die in die Dekorschicht eingebracht werden soll, einschließen, und wobei der Laser (401) ein Bild der Kontur auf die Oberfläche B (419) projiziert, wobei das Bild die Kontur der einzubringenden Nahtlinie definiert.

2. Verfahren nach Anspruch 1, einen Schritt zum Anbringen eines Führungsmittels an der Dekorschicht (10) umfassend, wobei der Schritt des Einbringens der Dekorschicht in die Nähmaschine umfasst, dass das Führungsmittel an einem Führungskörper (60) angreift, der eine definierte Ausrichtung und Position in Bezug auf die Nähmaschine aufweist und das Führungsmittel entlang einer Richtung führt, und wobei der Führungskörper eine Nut (62; 162; 262) aufweist, um das Führungsmittel darin zu führen.

3. Verfahren nach Anspruch 2, wobei die Führungsmittel ein Führungsprofil (30, 32) einschließen.

4. Verfahren nach Anspruch 3, wobei das Führungsprofil ein längliches Profil ist.

5. Verfahren nach einem der Ansprüche 2 bis 4, wobei die Führungsmittel auf der Oberfläche B angeordnet sind.

6. Verfahren nach einem der Ansprüche 2 bis 5, wobei die Führungsmittel anhand eines Haftmittels an der Dekorschicht angebracht werden.

7. Verfahren nach einem der Ansprüche 2 bis 6, wobei der Führungskörper Teil der Nähmaschine, vorzugsweise einer Stichplatte (54; 154; 254) der Nähmaschine, ist.

8. Verfahren nach einem der Ansprüche 2 bis 7, wobei der Schritt des Einbringens der mindestens einen Naht umfasst, dass die mindestens eine eingebrachte Naht im Wesentlichen parallel zu zumindest einem Teil der angebrachten Führungsmittel verläuft.

9. Verfahren nach einem der vorangehenden Ansprüche, wobei die mindestens eine Naht eine Fadennaht ist.

10. Verfahren nach einem der vorangehenden Ansprüche, wobei die mindestens eine eingebrachte Naht eine Ziernaht ist.

11. Verfahren nach einem der vorangehenden Ansprüche, wobei zwei oder mehr Nähte eingebracht werden.

12. Verfahren nach einem der vorangehenden Ansprüche, wobei ein Dichtungsband (40), das einen Bereich einer Oberfläche der Dekorschicht bedeckt, aufgebracht wird, wobei der bedeckte Bereich von der eingebrachten Naht durchdrungen wird.

13. Verfahren nach einem der vorangehenden Ansprüche, wobei die Dekorschicht mindestens eines aus einem Kunststoffmaterial, vorzugsweise PVC, und/oder einem thermoplastischen Material, vorzugsweise eines aus TPO, TPU oder TPEE, umfasst.

14. Verfahren nach einem der vorangehenden Ansprüche, wobei die Dekorschicht eine Dicke zwischen 0,2 mm und 2,5 mm aufweist.

## Revendications

1. Procédé pour introduire une couture à l'intérieur d'une couche de décor pour une partie de garniture de véhicule, la couche de décor comportant une surface A visible et une surface B qui est opposée à la surface A visible, le procédé comprenant les étapes qui suivent :
- la projection d'un moyen de guidage sur la couche de décor (10) ;
- l'introduction de la couche de décor à l'intérieur d'une machine à coudre (50, 150) ;
- l'introduction d'au moins une couture (15, 16) à l'intérieur de la couche de décor ; et
- l'enlèvement du moyen de guidage hors de la couche de décor ;
dans lequel :
le moyen de guidage inclut un faisceau lumineux qui est projeté sur la surface B (419) de la couche de décor, dans lequel un système (400) qui inclut un laser (401) et un contrôleur (402) est prévu, lequel système (400) lit des données de la couche de décor à partir d'un fichier (403) ou à partir d'une image enregistrée, les données incluant un contour d'une ligne de couture à introduire à l'intérieur de la couche de décor, et dans lequel le laser (401) projette une image du contour sur la surface B (419), l'image définissant le contour de la ligne de couture à introduire.

2. Procédé selon la revendication 1, comprenant une étape pour lier un moyen de guidage à la couche de décor (10) ; dans lequel l'étape d'introduction de la couche de décor à l'intérieur de la machine à coudre comprend le fait que le moyen de guidage est engagé dans un corps de guide (60), qui présente une orientation et une position définies par rapport à la machine à coudre et qui guide le moyen de guidage suivant une direction, et dans lequel le corps de guide inclut une gorge (62 ; 162 ; 262) pour guider le moyen de guidage à l'intérieur de celle-ci.

3. Procédé selon la revendication 2, dans lequel le moyen de guidage inclut un profil de guidage (30, 32).

4. Procédé selon la revendication 3, dans lequel le profil de guidage est un profil allongé.

5. Procédé selon l'une quelconque des revendications 2 à 4, dans lequel le moyen de guidage est localisé sur la surface B.

6. Procédé selon l'une quelconque des revendications 2 à 5, dans lequel le moyen de guidage est lié à la couche de décor au moyen d'un adhésif.

7. Procédé selon l'une quelconque des revendications 2 à 6, dans lequel le corps de guide est une partie de la machine à coudre, de préférence une plaque à aiguille (54 ; 154 ; 254) de la machine à coudre.

8. Procédé selon l'une quelconque des revendications 2 à 7, dans lequel l'étape d'introduction de l'au moins une couture comprend le fait que l'au moins une couture introduite coure essentiellement en parallèle à au moins une partie du moyen de guidage lié.

9. Procédé selon l'une quelconque des revendications précédentes, dans lequel l'au moins une couture est une couture par fil.

10. Procédé selon l'une quelconque des revendications précédentes, dans lequel l'au moins une couture introduite est une couture décorative.

11. Procédé selon l'une quelconque des revendications précédentes, dans lequel deux coutures ou plus sont introduites.

12. Procédé selon l'une quelconque des revendications précédentes, dans lequel une bande adhésive (40) qui recouvre une zone d'une surface de la couche de décor est appliquée, la zone recouverte étant pénétrée par la couture introduite.

13. Procédé selon l'une quelconque des revendications précédentes, dans lequel la couche de décor comprend au moins un matériau parmi un matériau de matière plastique, de préférence du PVC, ou un matériau thermoplastique, de préférence un matériau parmi une polyoléfine thermoplastique ou TPO, un polyuréthane thermoplastique ou TPU et un élastomère polyester thermoplastique ou TPEE.

14. Procédé selon l'une quelconque des revendications précédentes, dans lequel la couche de décor présente une épaisseur entre 0,2 mm et 2,5 mm.
